Europäisches Patentamt

European Patent Office

Office européen des brevets

(19)

(11) Publication number: **0 044 196**
**B1**

# (12) EUROPEAN PATENT SPECIFICATION

(45) Date of publication of patent specification: **09.10.85**

(21) Application number: **81303116.8**

(22) Date of filing: **08.07.81**

(51) Int. Cl.⁴: **H 01 J 61/56, H 01 J 61/30**

(54) Compact fluorescent lamp arrangement.

(30) Priority: **15.07.80 JP 96784/80**
**15.07.80 JP 96785/80**
**15.07.80 JP 96786/80**

(43) Date of publication of application:
**20.01.82 Bulletin 82/03**

(45) Publication of the grant of the patent:
**09.10.85 Bulletin 85/41**

(84) Designated Contracting States:
**DE FR GB IT NL**

(56) References cited:
**GB-A-2 003 314**
**GB-A-2 033 653**
**US-A-3 070 767**
**US-A-3 953 761**

(73) Proprietor: **Kabushiki Kaisha Toshiba**
**72, Horikawa-cho Saiwai-ku**
**Kawasaki-shi Kanagawa-ken 210 (JP)**

(72) Inventor: **Osada, Kimio**
**Patent Division 72, Horikawa-cho Saiwai-ku**
**Kawasaki-shi Kanagawa-ken (JP)**
Inventor: **Hayashi, Motokazu**
**Patent Division 72, Horikawa-cho Saiwai-ku**
**Kawasaki-shi Kanagawa-ken (JP)**
Inventor: **Kamei, Taketo**
**Patent Division 72, Horikawa-cho Saiwai-ku**
**Kawasaki-shi Kanagawa-ken (JP)**

(74) Representative: **Kirk, Geoffrey Thomas et al**
**BATCHELLOR, KIRK & EYLES 2 Pear Tree Court**
**Farringdon Road**
**London EC1R 0DS (GB)**

Courier Press, Leamington Spa, England.

## Description

This invention relates to a compact fluorescent lamp arrangement.

Fluorescent lamps have been used as a source of illumination for many years. A fluorescent lamp has a high lighting efficiency and a low consumption of electric power in comparison with an incandescent lamp and, therefore, a compact fluorescent lamp arrangement provided with an incandescent lamp base, i.e. an E 26-type screw cap lamp base, has been developed to enable a fluorescent lamp to be used from an incandescent lamp fitting. In order to interchange an incandescent lamp with such a compact fluorescent lamp arrangement, it is necessary for the fluorescent lamp to have a folded envelope because, in order to obtain about the same brightness as with an incandescent lamp, it is necessary for the fluorescent lamp's envelope to have a certain minimum length. Such a compact fluorescent lamp arrangement is known, for example, from U.S. Patent No. 3953761.

It is also known from Japanese Patent Application No. 55-94723 filed on 11th July, 1980 for a compact fluorescent lamp to have a chassis member, a folded fluorescent lamp and a ballast mounted on the chassis member and connected electrically to a screw cap lamp base on the chassis member, a base member attached to the chassis member and a globe member attached to the base member, with the chassis member including a part of cylindrical form with longitudinally extending slots in the outer surface of said part and a threaded portion at the outer end of said part.

With such lamps it is essential, of course, that the lamp base makes a good fit to the chassis member.

According to the present invention, a compact fluorescent lamp arrangement comprises a chassis member having a holding plate receiving a ballast and a maintaining plate receiving the ends of a folded fluorescent lamp, the chassis member including a part of cylindrical form having a straight portion and a threaded portion of reduced diameter at the outer end of said part, which cylindrical part is further provided with longitudinally extending slots on its outer surface; a screw cap lamp base screwed on to the threaded portion and connected electrically to the ballast and the lamp, said connection including a lead-wire to an electrode on said folded lamp in one of said slots; a base member attached to the chassis member and a globe member attached to the base member; characterised in that a rim portion of the screw cap lamp base fits over and engages the outer surface of the straight portion of the part of cylindrical form and that fixing protrusions formed on the screw cap lamp base after it has been screwed on to the threaded portion project into said slots.

With this construction, when the screw cap lamp base is attached to the cylindrical part, the inside surface of the non-thread portions of the screw cap lamp base and the outside surface of the cylindrical part of the chassis member which is of non-reduced diameter are in surface contact with each other and, thus, the frictional resistance to turning increases and the fixing of the lamp base to the cylindrical part is assured.

The fixing protrusions are conveniently formed by a punch which shapes the part of the base cap to tightly fit into the slots.

In order that the invention may be more readily understood, it will now be described, by way of example only, with reference to the accompanying drawings, in which:—

Figure 1 is a longitudinal cross-sectional view of a compact fluorescent lamp of this invention;

Figure 2 is a view taken on line II—II of Figure 1;

Figure 3 is a perspective view of a chassis member of a compact fluorescent lamp of this invention;

Figure 4 is an enlarged elevational view, partly in cross-section, of a screw base fixed to a chassis member of a compact fluorescent lamp arrangement of this invention; and

Figure 5 is a schematic diagram of an electric circuit embodying this invention.

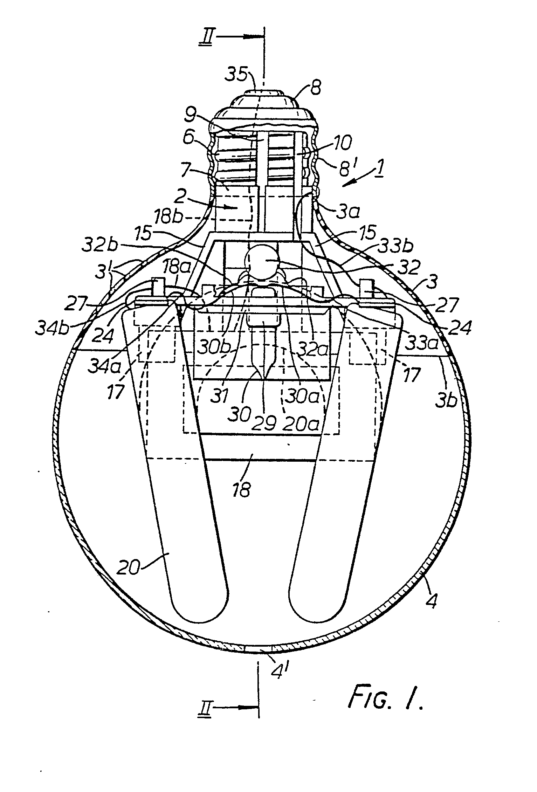

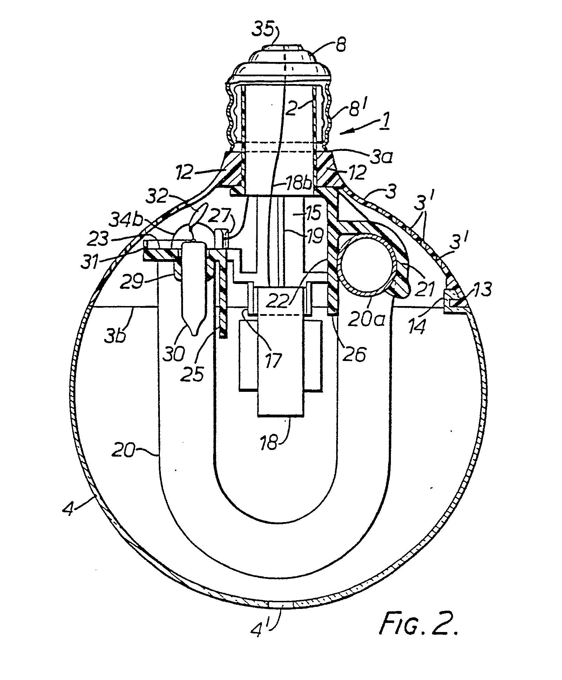

Referring now to the drawings, wherein like reference numerals designate identical or corresponding parts through the several views, and more particularly to Figures 1, 2 and 3 thereof, a compact fluorescent lamp arrangement 1 has a chassis member 2, a base member 3 and a non-opaque globe member 4, as shown. The chassis member 2 is made of heat proof plastics (i.e. polycarbonate resin) and includes a cylindrical part 5 at one end thereof.

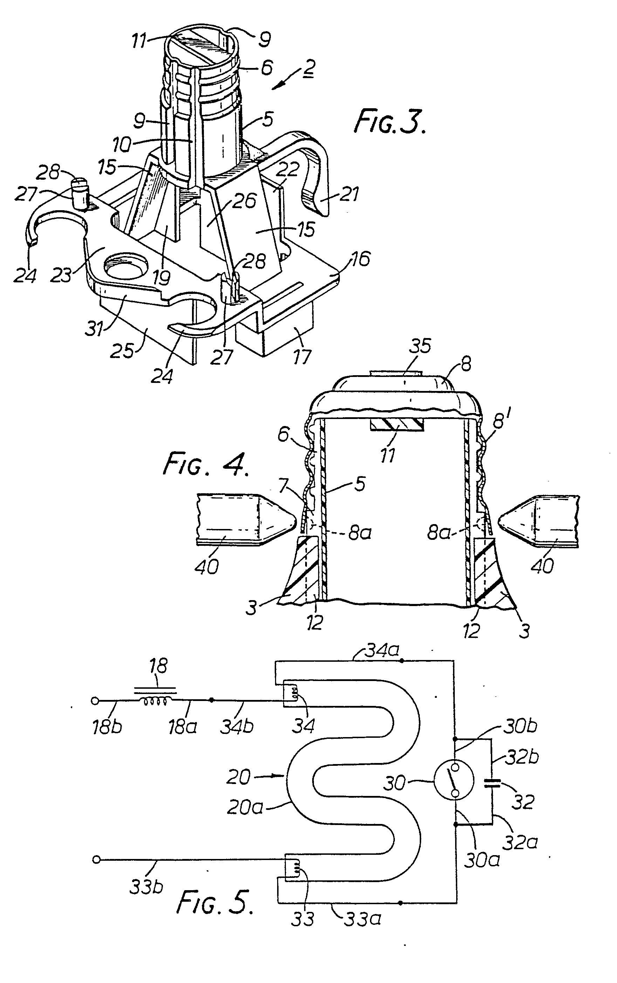

The cylindrical part 5 consists of a plurality of screw thread portions 6 mounted in an end of a straight portion 7. The length of the screw thread portions 6 of the cylindrical part 5 is less than that of thread portions 8' formed on a screw cap lamp base 8 as used for incandescent lamps (i.e. E-26 type base). The diameter of the screw thread portions 6 is only slightly less than that of the straight portion 7. Moreover, the cylindrical part 5 is formed with opposing longitudinal recesses or slots 9 and a longitudinal slot 10 extends along the entire length of the outer surface thereof. Moreover, as best seen in Figure 3, the outer end of each of the recesses and the slot 10 is open. A strut 11 is provided across the open end of the cylindrical part 5 to mechanically reinforce it.

The hemispherical-shaped base member 3 has an upper opening 3a and a lower opening 3b and is attached to the cylindrical part 5 of the chassis member 2. The inside surface of the upper opening 3a is provided with opposing projection parts 12 and the attachment of the cylindrical part 5 to the base member 3 is accomplished by positioning the projections 12 of the base member 3 into the recesses 9 of the chassis member 2. Screw cap lamp base 8 is then fixed by screwing to the screw thread portions 6 of the cylindrical part 5.

As best seen in Figure 4, a more certain fixing between the screw cap lamp base 8 and the cylindrical part 5 is achieved by forming fixing protrusions 8a at the portion of the base 8 corresponding to the portions of recesses 9 provided at the straight portion 7 of the cylindrical part 5. The protrusions 8a may be formed by punching the base with punches 40 once base 8 has been positioned on the screw thread portions 6.

The base member 3 is provided with a plurality of arc-shaped openings 3' adjacent the lower peripheral opening 3b. The lower opening 3b of the base member 3 is mounted on the bowl-shaped globe member 4 which is made of plastics (i.e. polycarbonate) and coloured, for example, white. The globe member 4 has a plurality of openings 4' to permit air to flow into the top thereof. The connection of the base member 3 to the globe member 4 is achieved by means of cooperating hook portions 13 and 14 provided respectively at the peripheries of the base member 3 and the globe member 4.

Two arm parts 15 are formed at the inner end on the cylindrical part 5 of the chassis member 2. A rectangular holding plate 16 is connected to the arm parts 15. A pair of opposed channel-shaped fixing wall members 17 are mounted on the holding plate 16 so as to face each other.

Between the fixing wall members 17, the top of a ballast 18 is positioned and it is fixed with its lead wires 18a, 18b leading to the base member 3. The height of the fixing members 17 is from 20 to 25 per cent of the height of the ballast 18. A rib 19 is provided inside each of the arm parts 15, not only to reinforce these parts but also to provide a stop face for the top of the ballast 18. A folded envelope 20 is supported by the holding plate 16 so as to surround the ballast 18. The envelope 20 is formed by bending a straight glass tube into a U-shape to form a first bent part 20a and a pair of first leg parts 20b, followed by the bending once more of each of the pair of leg parts 20b into second U-shapes to form second leg parts 20c and two pairs of second bent parts 20d. The thus folded envelope 20 is of a small and compact shape which may be referred to as a saddle shape envelope.

The holding plate 16 also provides a hook arm member 21 extending from a spreader plate 22 to hold the first bent part 20a of the envelope 20 and a maintaining plate 23 having parts 24 which serve to hold the ends of the winding envelope 20. The first bent part 20a of the envelope 20 is maintained between the hook arm member 21 and the spreader plate 22. The maintaining plate 23 is like a flange having semicircular pieces 24 at opposite ends which hold the ends of the winding envelope 20. The holding plate 16 of the chassis member 2 provides a large heat shield plate 25 mounted on the maintaining plate 23 and a small heat shield plate 26 mounted on the spreader plate 22. Consequently, heat from the ballast 18 is shielded from the first bent part 20a and both ends of the winding envelope 20 by the large and small heat shield plates 25 and 26.

The plate 23 also provides a pair of guide projections 27, each having a longitudinal notch 28 therein, the notches being directed toward the central axis of the cylindrical part 5. Consequently, the notches of the guide projections 27 and the slot 10 of the cylindrical part 5 face each other. The plate 23 also provides a holder 29 for a glow starter 30 at the centre thereof and directly in front of the large heat shield plate 25.

The maintaining plate 23 also includes an edge member such as a perpendicular edge wall 31 along the edge on the same side of the maintaining plate as the guide projections 27. The edge wall 31 has sufficient height to reduce the clearance formed when the chassis member 2 is attached to the base member 3 such that fingers cannot be inserted to touch the lead wires. The edge wall 31 extends to the semicircular pieces 24.

Lead wires 30a and 30b of the glow starter are connected to the respective lead wires 32a and 32b of a capacitor 32 by twisting lead wires together, and each of the sets of connected wires 30a and 32a, as well as 30b and 32b, are connected by soldering to respective lead wires 33a and 34a of electrodes 33 and 34 mounted on the ends of the folded envelope 20. These sets of lead wires 30a, 32a and 33a, as well as 30b, 32b and 34a, are kept within the edge wall 31. The lead wires 33b and 34b of the electrodes 33 and 34 are connected respectively to the screw cap lamp base 8 and to the lead wire 18a of the ballast 18. That is, after the lead wire 33b has been inserted into the notch 28, it is lead to the screw cap lamp base 8 by way of the slot 10 which requires the shortest travel distance for the lead wire 33b. The end of the lead wire 33b is soldered to the screw cap lamp base 8. The lead wire 18b of the ballast 18 is connected by soldering after being guided through the inside of the cylindrical part 5, to an outer contact 35 of the screw cap lamp base 8.

The inner surface of the envelope 20 is coated with phosphorus, and a predetermined amount of mercury and inert gases are sealed in the envelope 20.

In the compact fluorescent lamp arrangement, the longitudinal slot 10 is provided on the cylindrical parts of the chassis member 2. Consequently, since the lead wire 33b is lead to the edge of the screw cap lamp base 8 by way of the slot 10, the movement of the lead wire 33b is checked even when the screw cap lamp base 8 is fixed by screwing to the thread portion 6 of the cylindrical part 5. As the position of the lead wire 33b relative to the screw cap lamp base 8 is uniform, the efficiency of the next manufacturing step is increased.

Since the notches 28 on the guide projections 27 are directed towards the slot 10 of the cylindrical part 5, the lead wire 33b of the electrode 33 is not only fixed firmly by inserting it into the notch 28 but it is lead to the slot 10 by the shortest distance.

As the length of the thread portions 6 of the cylindrical part 5 is less than that of the thread portion 8' of the screw cap lamp base 8, and the diameter of the thread portions 6 is formed slightly smaller than that of the straight portion 7, when the screw cap lamp base 8 is attached to the cylindrical part 5, the inside surface of the non-thread portions of the screw cap lamp base 8 and the outside surface of the straight portion 7 are in surface contact with each other. Thus, the frictional resistance to turning increases and the fixing of the screw cap lamp base 8 to the cylindrical part 5 becomes firm and stable. Moreover, by use of a punch 40, the fixing of the screw cap lamp base 8 to the cylindrical part 5 is assured. Such a stable fixing of the screw cap lamp base 8 is desirable in a compact fluorescent lamp arrangement which requires high mechanical strength at the screw base portion.

Furthermore, since an edge wall 31 is provided at the edge of the maintaining plate 23, the lead wires of the folded envelope 20, the glow starter 30 and the capacitor 32 may be held on the maintaining plate 23 and the edge wall 31 prevents these lead wires from protruding beyond the maintaining plate 23. When the chassis member 2 including the maintaining plate 23 is attached to the base member 3, the edge wall 31 prevents fingers from touching the lead wires. A plurality of projections formed at adequate intervals instead of the edge wall 31, would of course provide the same function as the edge wall 31.

## Claims

1. A compact fluorescent lamp arrangement comprising a chassis member (2) having a holding plate (16) receiving a ballast (18) and a maintaining plate (23) receiving the ends of a folded fluorescent lamp (20), the chassis member including a part (5) of cylindrical form having a straight portion (7) and a threaded portion (6) of reduced diameter at the outer end of said part, which cylindrical part (5) is further provided with longitudinally extending slots (9, 10) on its outer surface; a screw cap lamp base (8) screwed on to the threaded portion and connected electrically to the ballast and the lamp, said connection including a lead-wire to an electrode on said folded lamp in one (10) of said slots; a base member (3) attached to the chassis member and a globe member (4) attached to the base member; characterised in that a rim portion of the screw cap lamp base fits over and engages the outer surface of the straight portion of the part (5) of cylindrical form and that fixing protrusions (8a) formed on the screw cap lamp base after it has been screwed on to the threaded portion project into said slots (9).

2. A compact fluorescent lamp arrangement as claimed in claim 1, characterised in that the protrusions (8a) are formed on the screw cap lamp base by a punching operation.

3. A compact fluorescent lamp arrangement as claimed in claim 1 or 2, wherein said screw base includes a punched fixing protrusion (8a) extending into each said elongated slots (9) whereby said screw base is fixed to said cylindrical part after being secured to said cylindrical part by screwing.

4. A compact fluorescent lamp arrangement as claimed in any preceding claim, wherein said maintaining plate includes guide projections (27) having notches (28), each said notch being in line with said one elongated slot.

5. A compact fluorescent lamp arrangement as claimed in any preceding claim, wherein said maintaining plate includes a perpendicular wall member (31) at the edge thereof.

## Patentansprüche

1. Kompakte Fluoreszenzlampen-Anordnung, mit einem Chassisglied (2), mit einer Halteplatte (16) zur Aufnahme eines Ballastes (18) und mit einer Halteplatte (23), die die Enden einer gebogenen Fluoreszenzlampe (20) aufnimmt, wobei das Chassisglied ein Teil (5) zylindrischer Form und mit einem geraden Teil (7) und einem Gewindeteil (6) mit verringertem Durchmesser am äußeren Ende des genannten Teiles aufweist, wobei der zylindrische Teil (5) außerdem mit sich in Längsrichtung erstreckenden Schlitzen (9, 10) auf seiner Außenfläche versehen ist; ein Lampenschraubkappensockel (8) ist auf den Gewindeteil geschraubt und elektrisch mit dem Ballast und der Lampe verbunden, wobei die Verbindung einen Verbindungsdraht zu einer Elektrode der gebogenen Lampe in einem (10) der Schlitze aufweist; ein Basisglied (3) ist an dem Chassisglied befestigt, und ein Kugelglied (4) ist an dem Basisglied angebracht, dadurch gekennzeichnet,

daß ein Kantenteil der Lampenschraubkappenbasis die äußere Fläche des geraden Teils des Teils (5) der zylindrischen Form übergreift und daran anliegt, und daß Befestigungsvorsprünge (8a), die an dem Lampenschraubkappensockel gebildet sind, nach Aufschrauben auf den Gewindeteil in die genannten Schlitze (9) ragen.

2. Fluoreszenzlampen-Anordnung nach Anspruch 1, dadurch gekennzeichnet, daß die Vorsprünge (8a) an dem Lampenschraubkappensockel durch einen Stanzvorgang gebildet sind.

3. Fluoreszenzlampen-Anordnung nach Anspruch 1 oder 2, dadurch gekennzeichnet, daß die genannte Schraubbasis einen gestanzten Befestigungsvorsprung (8a) aufweist, der sich jeweils in die genannten langgestreckten Schlitze (9) erstreckt, wodurch die Schraubbasis an dem genannten zylindrischen Teil fixiert ist, nachdem sie durch Schrauben an dem zylindrischen Teil befestigt ist.

4. Fluoreszenzlampen-Anordnung nach einem der vorhergehenden Ansprüche, dadurch gekennzeichnet, daß die Halteplatte Führungsvorsprünge (27) mit Aussparungen (28) aufweist, die jeweils mit dem genannten einen, langgestreckten Schlitz fluchten.

5. Fluoreszenzlampen-Anordnung nach einem der vorhergehenden Ansprüche, dadurch gekennzeichnet, daß die Halteplatte an ihrer Kante ein senkrechtes Wandungsteil (31) aufweist.

**Revendications**

1. Une structure de lampe fluorescente à faible encombrement comprenant un châssis (2) qui comporte une plaque de retenue (16) recevant un ballast (18) et une plaque de maintien (23) recevant les extrémités d'une lampe fluorescente repliée (20), le châssis comprenant un élément (5) de forme cylindrique ayant une partie droite (7) et une partie filetée (6) de diamètre réduit à l'extrémité extérieure de cet élément, cet élément cylindrique (5) comprenant en outre des encoches (9, 10) qui s'étendent en direction longitudinale sur sa surface extérieure; un culot de lampe à vis (8) vissé sur la partie filetée et connecté électriquement au ballast et à la lampe, cette connexion comprenant un fil de connexion dirigé vers une électrode de la lampe repliée, logé dans une première (10) des encoches; une embase (3) fixée au châssis et un globe (4) fixé à l'embase; caractérisée en ce qu'une partie périphérique du culot de lampe à vis s'adapte sur la surface extérieure de la partie rectiligne de l'élément (5) de forme cylindrique, en venant en contact avec cette surface, et en ce que des saillies de fixation (8a) qui sont formées sur le culot de lampe à vis après que celui-ci a été vissé sur la partie filetée, font saillie dans les encoches (9).

2. Une structure de lampe fluorescente à faible encombrement selon la revendication 1, caractérisée en ce que les saillies (8a) sont formées sur le culot de lampe à vis par une opération de poinçonnage.

3. Une structure de lampe fluorescente à faible encombrement selon la revendication 1 ou 2, dans laquelle le culot à vis comprend une saillie de fixation poinçonnée (8a) qui pénètre dans chacune des encoches allongées (9), grâce à quoi ce culot à vis est maintenu en position fixe sur l'élément cylindrique après avoir été fixé à l'élément cylindrique par vissage.

4. Une structure de lampe fluorescente à faible encombrement selon l'une quelconque des revendications précédentes, dans laquelle la plaque de maintien comprend des tétons de guidage (27) comportant des encoches (28), et chacune de ces encoches est alignée avec ladite encoche allongée.

5. Une structure de lampe fluorescente à faible encombrement selon l'une quelconque des revendications précédentes, dans laquelle la plaque de maintien comporte sur son bord un élément de paroi perpendiculaire (31).

FIG. I.

FIG. 2.

# 0 044 196

**FIG. 3.**

**FIG. 4.**

**FIG. 5.**